# FASCICULE DE BREVET EUROPEEN

(11) **EP 2 856 719 B1**
(45) Date de publication et mention de la délivrance du brevet: **25.04.2018**
(21) Numéro de dépôt: 13729992.1
(22) Date de dépôt: 17.05.2013
(51) Int. Cl.: H04L 12/801, H04L 12/823, H04L 12/811, H04L 29/08

(54) **TECHNIQUE DE COMMUNICATION DANS UN RÉSEAU DE COMMUNICATION CENTRÉ SUR LES INFORMATIONS**
VERFAHREN ZUR KOMMUNIKATION IN EINEM INFORMATIONSZENTRIERTEN KOMMUNIKATIONSNETZWERK
TECHNIQUE FOR COMMUNICATION IN AN INFORMATION-CENTRED COMMUNICATION NETWORK

(30) Priorité: 29.05.2012 FR 1254943
(43) Date de publication de la demande: 08.04.2015
(73) Titulaire: Orange, 75015 Paris (FR)
(72) Inventeur: MUSCARIELLO, Luca, F-92290 Chatenay Malabry (FR); CAROFIGLIO, Giovanna, F-92290 Chatenay Malabry (FR)
(86) Numéro de dépôt international: PCT/FR2013/051098
(87) Numéro de publication internationale: WO 2013/178910

(56) Documents cités:
- WO-A1-02/089014
- US-A1- 2005 083 973

## Description

L'invention concerne une technique de communication dans un réseau de communication centré sur les informations, mettant en oeuvre un acheminement par nom.

L'article de Van Jacobson et al, intitulé « Networking Named Content » et publié en 2009 dans les actes de la conférence CoNEXT'09 présente une nouvelle architecture centrée sur les contenus, appelée « Content-Centric Networking » en anglais. Cette architecture propose de changer le modèle de communication actuel basé sur un adressage physique dans le réseau par un nouveau modèle de communication basé sur un adressage par nom des contenus. Le document WO02/089014 décrit un système de gestion des entrées/sorties pour la distribution de contenus. De document décrit plus particulièrement une solution visant à traiter des demandes reçues par un serveur de stockage et associées à un niveau de priorité défini par un contrat de niveau de service (SLA).

Le document US2005/0083973 décrit un système permettant de diminuer le nombre de services informatiques fournis à des clients au sein d'un ordinateur ou d'un système informatique en temporisant une première classe de services fournie par un serveur réseau de ce système lorsque la bande passante utilisée par ce dernier dépasse un premier seuil. Un flot peut être fourni pour différentes applications, temps réel ou non, et est identifié dans le réseau de communication par un nom ou identifiant de flot. Un flot est composé de segments de données. Un segment de données est, quant à lui, identifié par un numéro de segment et l'identifiant de flot.

Plus précisément, pour obtenir un segment de données d'un flot, une entité cliente transmet une demande relative à ce segment de données, appelée « Interest Packet ». Sur réception de cette demande, un noeud d'acheminement vérifie s'il dispose du segment de données recherché. Si tel est le cas, il le transmet alors vers l'interface par l'intermédiaire de laquelle la demande a été reçue, à destination ainsi de l'entité cliente, le cas échéant par l'intermédiaire d'autres noeuds d'acheminement. S'il ne dispose pas du segment de données recherché, il vérifie dans une table de demandes pendantes PIT, pour « Pending Interest Table» en anglais, s'il a déjà transmis une demande relative au même segment de données. Si tel n'est pas le cas, il mémorise dans la table de demandes pendantes PIT l'identifiant du segment de données recherché en association avec un identifiant de l'interface par l'intermédiaire de laquelle la demande relative au segment de données recherché a été reçue. Il achemine ensuite dans le réseau de communication la demande en fonction de l'identifiant de flot. Dans le cas contraire, c'est-à-dire lorsque la table de demandes pendantes comprend déjà l'identifiant du segment de données recherché, il ne transmet pas la demande reçue mais associe dans la table de demandes pendantes PIT à l'identifiant du segment de données recherché un identifiant de l'interface par l'intermédiaire de laquelle la demande a été reçue. Lorsque le noeud d'acheminement reçoit le segment de données recherché, il le retransmet sur l'ensemble des interfaces par l'intermédiaire desquelles des demandes relatives à ce segment de données ont été reçues, à destination finale de l'ensemble des entités clientes l'ayant demandé.

En cas de congestion provoquée par exemple par un volume trop important de segments de données à acheminer, un noeud d'acheminement ne va pas pouvoir transmettre immédiatement un ou plusieurs segments de données. Celui-ci ou ceux-ci vont alors être mémorisés dans une file d'attente, voire même supprimés lorsque cette dernière est saturée. On constate que dans ce type de réseau de communication, chaque noeud d'acheminement a pour rôle d'agréger les demandes relatives à un même segment de données d'un flot. L'absence d'acheminement d'un segment de données a pour effet, du fait de la fonction d'agrégation des noeuds d'acheminement, de ne pas satisfaire une pluralité d'entités clientes ayant demandé celui-ci. Le nombre d'entités clientes concernées dépend d'un degré d'agrégation effectué lors du traitement des demandes relatives à un segment de données du flot. On rappelle ici que dans le modèle de communication classique, dans un réseau de communication avec un adressage physique, une seule entité cliente est impactée par la suppression d'un paquet ou segment de données qu'elle a demandé.

Un des buts de l'invention est de remédier à des insuffisances/inconvénients de l'état de la technique et/ou d'y apporter des améliorations.

Selon un premier aspect, l'invention a pour objet un procédé de communication mis en oeuvre par un dispositif d'acheminement dans un réseau de communication centré sur les informations. Ce procédé comprend les étapes suivantes mises en oeuvre pour traiter une demande relative à un segment de données d'un flot donné, cette demande étant à acheminer sur un lien du dispositif d'acheminement :
- une étape de vérification qu'un débit en entrée pour ledit lien est supérieur à un seuil, le débit en entrée pour ledit lien correspondant à celui nécessaire à une réception par le dispositif au moyen dudit lien du segment de données demandé et d'un ensemble de segments de données correspondant à des demandes pendantes ;
- une étape de temporisation de ladite demande à acheminer.

Des applications transmettent des segments de données relatifs à un flot. Il s'agit par exemple d'applications telles que des services de diffusion de contenus temps réel, à la demande ou bien encore « Live ». Il peut également s'agir d'applications de téléphonie. Aucune limitation n'est attachée au type d'application.

De tels segments de données peuvent être des objets ou bien des morceaux d'objet ou bien encore des paquets.

Le réseau de communication est un réseau centré sur les contenus ou informations. Il met ainsi en oeuvre un acheminement par nom et agrège des demandes relatives à un segment de données d'un flot. Dans ce type de réseau de communication, le dispositif d'acheminement est apte à agréger une pluralité de demandes relatives à un segment de données d'un flot en une autre demande et ne transmet ainsi qu'une seule demande pour un segment de données.

Par la suite, une demande relative à un segment de données émise par un dispositif d'acheminement vers un autre dispositif d'acheminement, déterminé à l'aide de la table d'acheminement, est dite en sortie du dispositif. Le segment de données reçu en réponse par le dispositif d'acheminement en provenance de cet autre dispositif d'acheminement, est dit en entrée du dispositif d'acheminement.

Une demande ou requête relative à un segment de données est dite à acheminer, lorsque la table des demandes pendantes ne comprend pas d'identifiant du segment de données, c'est-à-dire qu'aucune demande n'est en cours ou pendante pour ce segment de données.

Un flot actif est un flot pour lequel au moins une demande ou requête relative à un segment de données de ce flot est pendante. La table des demandes pendantes comprend ainsi un identifiant d'un segment de données du flot.

Ainsi, grâce à l'invention, le procédé de communication permet de réguler pour un lien donné la transmission des demandes relatives à des segments de données en sortie du dispositif d'acheminement en fonction d'un débit attendu en entrée de ce dispositif. Ce procédé de communication est particulièrement bien adapté à un réseau de communication centré sur les contenus ou informations. En effet, un segment de données demandé suit obligatoirement le même chemin que celui de la demande correspondante, contrairement aux réseaux de communication avec un adressage physique.

Pour temporiser une demande, une file d'attente est prévue au niveau du dispositif d'acheminement. On souligne ici qu'une demande est de taille largement inférieure au segment de données dont elle demande la réception. Ainsi, l'espace mémoire nécessaire à la gestion de la file d'attente est très inférieur à celui qui serait nécessaire, selon les techniques connues, pour mémoriser des segments de données en présence d'une congestion.

Les différents modes ou caractéristiques de réalisation mentionnés ci-après peuvent être ajoutés indépendamment ou en combinaison les uns avec les autres, aux étapes du procédé de communication tel défini précédemment.

Selon une caractéristique particulière, le procédé de communication comprend en outre une étape d'obtention d'une information relative à un volume du segment de données demandé.

L'information relative au volume du segment de données peut être obtenue à partir de la demande elle-même ou par tout autre moyen. Elle permet d'approximer de manière fiable le débit en entrée pour chacun des flots actifs et d'améliorer ainsi les performances du procédé de communication.

Dans un premier mode de réalisation particulier, ce seuil correspond au débit disponible sur ledit lien en entrée dudit dispositif.

Dans un deuxième mode de réalisation particulier, le débit en entrée est déterminé pour les demandes pendantes relatives à des segments de données du flot donné et ledit seuil correspond à un débit équitable.

On appelle débit équitable un partage équitable entre les différents flots actifs du débit disponible sur ce lien en entrée du dispositif d'acheminement.

Dans ce deuxième mode de réalisation, pour un lien et pour un cycle, les demandes relatives à des segments de données d'un flot dont le débit attendu en entrée n'a pas dépassé le débit équitable sont transmises sans délai ; toujours pour ce lien, les demandes relatives à des segments de données d'un flot dont le débit attendu en entrée a dépassé le débit équitable sont temporisées et sont transmises ultérieurement en fonction du débit résiduel, correspondant à la différence entre le débit disponible et le débit global attendu sur le lien en entrée pour l'ensemble des demandes pendantes des flots actifs.

La répartition équitable du débit permet également de garantir à l'ensemble des flots actifs un accès équitable au lien en entrée du dispositif d'acheminement et de ne pas privilégier des flots pour lesquels des groupes de demandes sont transmis. On protège ainsi le réseau de communication en cas de distribution de tels flots. De plus, des demandes relatives à des segments de données appartenant à des flots pour lesquels le débit en entrée est inférieur au débit équitable sont acheminées sans délai.

Les performances du procédé dans ce deuxième mode de réalisation sont ainsi améliorées.

Selon une caractéristique particulière, le procédé de communication comprend :
- pour un flot actif, une étape d'incrémentation d'un crédit alloué audit flot actif en fonction du débit équitable, et
- une étape de décrémentation du crédit alloué au flot donné en fonction d'une information relative à un volume du segment de données demandé.

L'utilisation d'un compteur permet de déterminer de manière simple la consommation du débit équitable associée à un flot actif.

Selon une autre caractéristique particulière, l'étape de vérification consiste à vérifier que le flot donné a dépassé le débit équitable ou qu'au moins une demande du flot donné est temporisée.

Selon une caractéristique particulière du procédé, l'étape de temporisation consiste à mémoriser dans une file d'attente la demande à acheminer et à extraire ladite demande pour l'acheminer sur ledit lien en fonction d'un débit résiduel, déterminé en fonction du débit en entrée sur ledit lien.

Ainsi, le débit résiduel est utilisé pour transmettre les demandes mémorisées dans la file d'attente. Les demandes ont ainsi été temporisées pendant une durée variable, cette durée dépendant du débit résiduel.

Selon une autre caractéristique particulière, le débit résiduel est réparti entre les flots actifs ayant des demandes temporisées.

Selon un deuxième aspect, l'invention concerne également un dispositif d'acheminement dans un réseau de communication centré sur les informations. Ce dispositif d'acheminement comprend les moyens suivants, activés pour traiter une demande relative à un segment de données d'un flot donné, ladite demande étant à acheminer sur un lien du dispositif d'acheminement :
- des moyens de détermination d'un débit en entrée pour ledit lien, le débit en entrée pour ledit lien correspondant à celui nécessaire à une réception par le dispositif au moyen dudit lien dudit segment de données demandé et d'un ensemble de segments de données correspondant à des demandes pendantes
- des moyens de vérification, agencés pour vérifier que le débit en entrée est supérieur à un seuil ;
- des moyens de temporisation, agencés pour temporiser ladite demande à acheminer, en cas de vérification positive.

Selon un troisième aspect, l'invention concerne en outre un réseau de communication, comprenant un dispositif d'acheminement tel que décrit précédemment.

Selon un quatrième aspect, l'invention concerne un programme pour un dispositif d'acheminement, comprenant des instructions de code de programme destinées à commander l'exécution des étapes du procédé précédemment décrit, lorsque ledit programme est exécuté par ledit dispositif et un support d'enregistrement lisible par un dispositif d'acheminement sur lequel est enregistré un programme pour un dispositif d'acheminement.

L'invention sera mieux comprise à l'aide de la description suivante de modes de réalisation particuliers du procédé de l'invention, en référence aux dessins annexés sur lesquels :
- la figure 1 représente un réseau de communication centré sur l'information ;
- les figures 2a et 2b représentent des étapes du procédé selon un premier mode de particulier de réalisation de l'invention ;
- les figures 3a et 3b représentent des étapes du procédé selon un deuxième mode particulier de réalisation de l'invention ;
- la figure 4 représente un dispositif d'acheminement selon un mode particulier de l'invention ;
- les figures 5a et 5b illustrent des résultats respectivement obtenus selon l'état de la technique et grâce au procédé de communication dans le deuxième mode de réalisation.

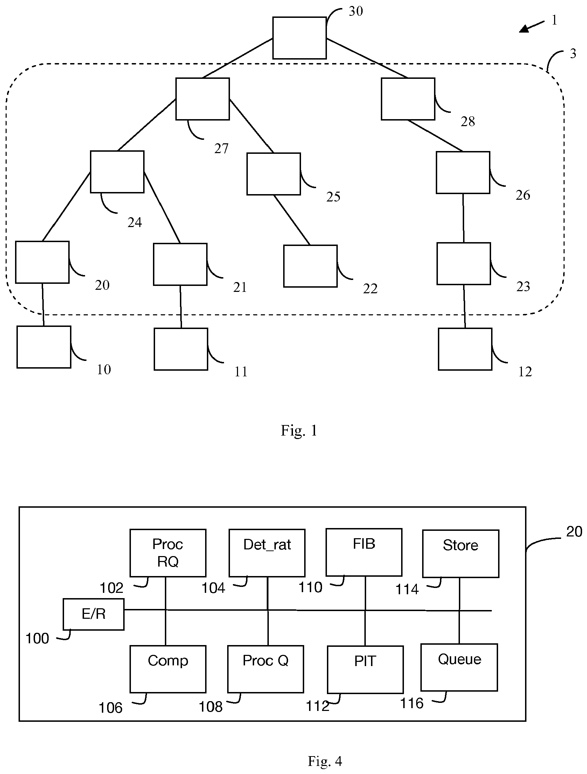

La figure 1 représente un réseau de communication 1 permettant à des entités clientes 10, 11, 12 d'accéder à différentes applications comme la télévision, la vidéo à la demande, l'Internet. Chaque entité cliente 10, 11, 12 est reliée à un réseau d'accès 3. Ce dernier permet aux entités clientes d'accéder aux applications mises en oeuvre par des serveurs, dont un d'entre eux, le serveur 30, est représenté sur la figure 1.

Lorsqu'une entité cliente 10-12 accède à une application donnée mise en oeuvre par le serveur 30, des segments de données relatifs à cette application donnée sont échangés du serveur 30 vers l'entité cliente 10-12. De tels segments de données peuvent être des objets ou bien des morceaux d'objet ou bien encore des paquets.

Il peut s'agir d'une navigation sur un site Web comprenant des segments de données. Il peut également s'agir d'une application de diffusion de contenus, par exemple dans une architecture de type CDN, pour « Content Delivery Network ».

On se place par la suite dans le cas particulier où le réseau de communication 1 est centré sur l'information ICN, pour « Information-Centric Networking ». A titre d'exemple non limitatif, le réseau de communication met en oeuvre les mécanismes d'adressage par nom, tels que décrits dans l'article Van Jacobson et al., intitulé « Networking Named Content», mentionné précédemment. Un tel réseau de communication est également appelé réseau centré sur les contenus CCN, pour «Content Centric Network ». A titre d'exemple non limitatif, selon cet article, un identifiant de flot Id_F est organisé de la façon suivante :
- un préfixe, correspondant à un nom acheminable ou routable, par exemple « parc.com »,
- un nom dans l'organisation, par exemple « videos/WidgetA.mpg ».

Un segment de données appartenant à un flot est identifié par l'identifiant du flot, des informations temporelles et une information relative au numéro de segment.

Selon cet exemple, le segment de données est identifié « /parc.com/videos/WidgetA.mpg/_v <timestamp>/_s3 ».

Dans un mode particulier de réalisation, une information relative à un volume du segment de données est associée à l'identifiant du segment de données. Cette information est par exemple fournie sous la forme d'un nombre d'octets formant le segment de données. Aucune limitation n'est attachée à ce mode d'obtention de cette information. Il est par exemple possible de l'obtenir à partir d'un fichier descriptif du contenu. Il est également possible de l'obtenir à partir du premier segment de données du flot.

Plus précisément, une entité cliente 10 transmet une ou plusieurs demandes relatives à des segments de données. Dans le cas particulier où le serveur 30 dispose de ces segments de données, ce dernier les transmet à destination de l'entité cliente 10. Les segments de données transitent alors par l'intermédiaire du réseau d'accès 3 à destination de l'entité cliente.

Le réseau d'accès 3 comprend des dispositifs d'acheminement 20-28. Ces dispositifs d'acheminement 20-28, dont l'un d'entre eux le dispositif d'acheminement 20 est représenté à la figure 4, comprennent notamment dans ce type de réseau de communication trois structures de données :
- une première table 110, appelée table d'acheminement FIB, pour « Forwarding Information Base », agencée pour mémoriser des données d'acheminement, plus précisément une liste d'interfaces en association avec un préfixe ;
- une deuxième table 112, appelée table des demandes pendantes PIT, pour « Pending Interest Table », agencée pour mémoriser une liste d'interfaces par l'intermédiaire desquelles une ou des demandes relatives à un segment de données d'un flot ont été reçues, tant que ce segment de données n'a pas été reçu en réponse (la demande étant alors pendante) ;
- des moyens de mémorisation 114, appelée magasin de contenus ou « Content Store », agencés pour mémoriser des segments de données.

Un tel dispositif d'acheminement peut être un routeur du réseau, une passerelle d'accès au réseau, un équipement multiplexeur d'accès.

Tel que représenté sur la figure 1, l'entité cliente 10 est reliée au dispositif d'acheminement 20. L'entité cliente 11 est reliée au dispositif d'acheminement 21. Les dispositifs d'acheminement 20 et 21 sont reliés au dispositif d'acheminement 24. Le dispositif d'acheminement 22 est relié au dispositif d'acheminement 25. Les dispositifs d'acheminement 24 et 25 sont reliés au dispositif d'acheminement 27. L'entité cliente 12 est reliée au dispositif d'acheminement 23, qui est lui-même relié au dispositif d'acheminement 26, relié au dispositif d'acheminement 28. Les dispositifs d'acheminement 27 et 28 sont reliés au serveur 30. On souligne ici qu'il s'agit d'un exemple illustratif et qu'aucune limitation n'est attachée à cette représentation.

L'entité cliente 10 souhaitant obtenir un segment de données d'un flot transmet une demande IP, pour « Interest Packet », relative à ce segment de données. La demande est reçue par le dispositif d'acheminement 20. S'il ne dispose pas du segment de données demandé dans le magasin de contenus 114, le dispositif d'acheminement 20 utilise alors la table des demandes pendantes 112 pour vérifier s'il a déjà transmis une demande d'une autre entité cliente relative à ce segment de données. Si tel est le cas, il ajoute dans la table des demandes pendantes un identifiant de l'interface par l'intermédiaire de laquelle il a reçu la demande, en association avec un identifiant du segment de données recherché. S'il n'a pas encore transmis de demande relative à ce segment de données, le dispositif d'acheminement 20 mémorise dans la table des demandes pendantes 112 l'identifiant du segment de données en association avec un identifiant de l'interface par l'intermédiaire de laquelle il a reçu la demande. Puis, il achemine la demande vers le dispositif d'acheminement 24 à l'aide de la table d'acheminement 110. La table d'acheminement 110 permet ainsi de déterminer un lien en sortie du dispositif d'acheminement, sur lequel la demande va être acheminée. La demande se propage ainsi dans le réseau de communication 1, jusqu'à ce qu'un dispositif d'acheminement ou bien le serveur 30, disposant du segment de données recherché, le transmette. Lorsque le dispositif d'acheminement 20 reçoit en entrée le segment de données demandé, il le retransmet sur l'ensemble des interfaces par l'intermédiaire desquelles des demandes relatives à ce segment de données ont été reçues, à destination finale de l'ensemble des entités clientes l'ayant demandé. On note qu'ainsi une arborescence est établie par le biais des tables des demandes pendantes 112 des entités clientes 10-12 vers le serveur 30.

Par la suite, une demande relative à un segment de données est dite à acheminer, lorsque la table des demandes pendantes ne comprend pas l'identifiant du segment de données, c'est-à-dire qu'aucune demande relative à ce segment de données n'a été transmise en sortie du dispositif et est en attente de réponse.

Les dispositifs d'acheminement 20-28 comprennent au moins une file d'attente 116, agencée pour mémoriser des demandes relatives à des segments de données.

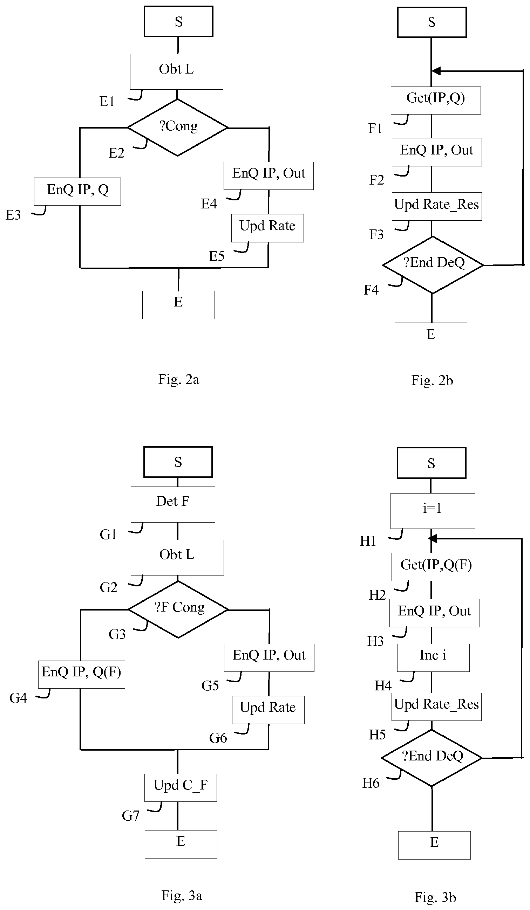

Nous allons maintenant décrire le procédé de communication, tel qu'il est mis en oeuvre par le dispositif d'acheminement 24 dans un premier mode particulier de réalisation, en relation avec les figures 2a et 2b.

Un cycle correspond dans ce premier mode de réalisation à une durée prédéterminée, dépendant du débit disponible sur le lien en entrée du dispositif.

La figure 2a décrit les étapes du procédé de communication qui sont mises en oeuvre par le dispositif d'acheminement 24 pour traiter une demande D relative à un segment de données à acheminer sur un lien en sortie du dispositif d'acheminement.

Dans une étape E1, le dispositif d'acheminement 24 obtient une information relative à un volume du segment de données demandé. Dans un mode de réalisation particulier, cette information est associée à un identifiant du segment de données demandé.

Dans une étape E2, le dispositif d'acheminement 24 détermine si un débit en entrée sur le lien L est supérieur à un seuil. Le débit en entrée sur le lien L correspond à celui nécessaire à une réception sur ce lien d'un ensemble de segments de données demandés. Il s'agit ainsi d'un débit attendu en réponse à des demandes pendantes. Dans ce premier mode de réalisation, le seuil correspond au débit disponible sur le lien en entrée du dispositif.

Si tel est le cas, c'est-à-dire que la réception attendue de segments de données dépasse le seuil, dans une étape E3, la demande à acheminer est temporisée, c'est-à-dire qu'elle n'est pas transmise immédiatement. Dans un mode de réalisation particulier, la demande D à acheminer est mémorisée dans la file d'attente 116.

Dans le cas contraire, dans une étape E4, la demande D à acheminer est transmise immédiatement par l'intermédiaire du lien L, plus précisément à l'interface de sortie en charge des émissions et réceptions sur le lien L.

Dans une étape E5, le dispositif d'acheminement 24 met à jour le débit global attendu sur le lien L pour l'ensemble des demandes pendantes.

Cette étape E5 termine le traitement de la demande D à acheminer. A l'issue de ces étapes E1 à E5, la demande à acheminer a été, soit transmise directement vers l'interface de sortie, soit temporisée pour être émise ultérieurement. Ainsi, les demandes relatives à des segments de données sont transmises directement tant que le débit attendu en entrée est inférieur au débit disponible sur le lien L. Dans le cas contraire, la mémorisation dans la file d'attente 116 permet de temporiser la transmission des demandes entraînant un dépassement du débit disponible en entrée et ainsi de réguler la transmission de ces demandes.

La figure 2b décrit, quant à elle, les étapes du procédé de communication qui sont mises en oeuvre pour un cycle pour extraire de la file d'attente 116 des demandes temporisées, lorsqu'un débit résiduel est disponible. Le débit résiduel pour le lien L est déterminé en fonction du débit global attendu déterminé à l'étape E5 et du débit disponible sur le lien L en entrée.

Dans une étape F1, le dispositif d'acheminement 24 extrait de la file d'attente 116 une demande temporisée, afin qu'elle soit transmise par l'intermédiaire du lien L.

Dans une étape F2, la demande temporisée extraite est transmise immédiatement sur le lien L, plus précisément à l'interface de sortie en charge des émissions et réceptions sur le lien L.

Dans une étape F3, le dispositif d'acheminement 24 met à jour le débit résiduel pour le lien L, en fonction de l'information relative au volume du segment de données demandé.

Dans une étape F4, le dispositif d'acheminement 24 détermine s'il reste du débit résiduel disponible sur ce cycle et s'il reste des demandes temporisées. Si tel est le cas, le procédé repasse à l'étape F1 d'extraction de la file d'attente.

Dans le cas contraire, les étapes du procédé de communication F1 à F4 mises en oeuvre pour un cycle pour transmettre les demandes temporisées grâce au débit résiduel sont terminées.

Ainsi, sur un cycle et pour un lien, le débit en entrée correspondant au débit nécessaire à la réception des segments de données, pour lesquels des demandes sont pendantes, ne dépasse pas le débit disponible en entrée du dispositif d'acheminement sur ce lien.

Dans une première variante, à l'étape E2, lorsque la demande ne peut être mémorisée en raison d'une saturation de la file d'attente 116, elle est supprimée. La demande est également supprimée de la table des demandes pendantes 112.

Dans une deuxième variante, une durée de validité est associée à une demande temporisée. Lorsque la demande n'est plus valide, elle est supprimée de la file d'attente 116 et de la table des demandes pendantes 112. Il est ici souligné que les temporisations pour la gestion de la file d'attente 116 et de la table des demandes pendantes 112 doivent être choisies de façon cohérente.

Nous allons maintenant décrire le procédé de communication, tel qu'il est mis en oeuvre par le dispositif d'acheminement 24 dans un deuxième mode particulier de réalisation, en relation avec les figures 3a et 3b.

Un flot actif est un flot pour lequel au moins une demande relative à un segment de données de ce flot a été transmise. La table des demandes pendantes comprend ainsi un identifiant d'un segment de données du flot.

Par la suite, on appelle débit équitable r un partage équitable du débit disponible en entrée du dispositif entre les différents flots actifs. On comprend que le débit équitable r est réévalué régulièrement en fonction du nombre de flots actifs.

Un cycle dans ce deuxième mode de réalisation est inversement proportionnel au débit équitable. Le cycle correspond à la durée nécessaire au traitement d'une demande pour chacun des flots actifs.

La figure 3a décrit les étapes du procédé de communication qui sont mises en oeuvre par le dispositif d'acheminement 24 pour traiter une demande D relative à un segment de données à acheminer sur un lien en sortie du dispositif d'acheminement.

Dans une étape G1, le dispositif d'acheminement 24 identifie un flot F auquel appartient le segment de données demandé.

Dans une étape G2, le dispositif d'acheminement 24 obtient une information relative à un volume du segment de données demandé. Dans un mode de réalisation particulier, cette information est associée à un identifiant du segment de données demandé.

Dans une étape G3, le dispositif d'acheminement 24 détermine si un débit en entrée sur le lien L pour le flot identifié F est supérieur à un seuil. Dans ce deuxième mode de réalisation, le seuil correspond au débit équitable. Le débit en entrée sur le lien L pour le flot identifié F correspond à celui nécessaire à une réception sur ce lien d'un ensemble de segments de données demandé pour le flot identifié. Il s'agit ainsi d'un débit attendu en réponse à des demandes pendantes relatives à des segments de données appartenant au flot identifié.

Si tel est le cas, c'est-à-dire que la réception attendue de segments de données appartenant au flot identifié dépasse le débit équitable, dans une étape G4, la demande à acheminer est temporisée, c'est-à-dire qu'elle n'est pas transmise immédiatement. Dans un mode de réalisation particulier, la demande D à acheminer est mémorisée dans la file d'attente 116.

Dans le cas contraire, dans une étape G5, la demande D à acheminer est transmise immédiatement par l'intermédiaire du lien L, plus précisément à l'interface de sortie en charge des émissions et réceptions sur le lien L.

Dans une étape G6, le dispositif d'acheminement 24 met à jour le débit global attendu sur le lien L pour l'ensemble des demandes pendantes des flots actifs.

Dans les deux cas, dans une étape G7, le dispositif d'acheminement 24 met à jour le débit en entrée pour le flot identifié F à partir de l'information relative au volume du segment de données demandé.

Cette étape G7 termine le traitement de la demande D à acheminer. A l'issue de ces étapes G1 à G7, la demande à acheminer a été, soit transmise directement vers l'interface de sortie, soit temporisée pour être émise ultérieurement. Ainsi, les demandes relatives à des segments de données d'un flot pour lequel le débit attendu en entrée est inférieur au débit équitable sont transmises directement. Dans le cas contraire, la mémorisation dans la file d'attente 116 permet de temporiser la transmission des demandes pour le flot identifié dépassant le débit équitable et ainsi de réguler la transmission de ces demandes.

Dans un mode de réalisation particulier, un crédit C(F) est associé à un flot actif. Lorsque le flot devient actif, c'est-à-dire lorsqu'un identifiant d'un segment de données du flot est le premier de ce flot à être mémorisé dans la table des demandes pendantes 112, le crédit C(F) associé au flot F est initialisé à un quota Q(r) dépendant du débit équitable r et alloué à chaque flot. Ce quota Q(r) correspond au volume de données que le dispositif d'acheminement peut requérir pour ce lien L et par flot sur un cycle et dépend du débit équitable r.

A l'étape G3, le débit en entrée sur le lien L pour le flot identifié F est supérieur au débit équitable lorsque le crédit C(F) est nul ou lorsqu'il existe au moins une demande temporisée.

A l'étape G7, le crédit C(F) associé au flot est diminué en fonction de l'information relative au volume du segment de données demandé. Dans un mode de réalisation particulier, s'il devient négatif, alors le crédit C(F) est bloqué à la valeur nulle.

En parallèle à ces étapes G1 à G7, les crédits respectivement associés à des flots actifs sont incrémentés du quota Q(r) par cycle, le quota dépendant du débit équitable r.

Dans ce mode de réalisation tel que décrit, le crédit C(F) ne peut être négatif. Ceci permet notamment de ne pas pénaliser sur le cycle suivant des flots pour lesquels les demandes sont reçues en rafale. Des flots vidéo sont par exemple des flots de ce type. Dans un autre mode de réalisation, le crédit C(F) peut prendre une valeur négative.

La figure 3b décrit, quant à elle, les étapes du procédé de communication qui sont mises en oeuvre pour un cycle pour extraire de la file d'attente 116 des demandes temporisées, lorsqu'un débit résiduel est disponible. Le débit résiduel pour le lien L est déterminé en fonction du débit global attendu déterminé à l'étape G6 et du débit disponible sur le lien L en entrée.

Dans un mode de réalisation particulier, la file d'attente 116 est partitionné, afin d'obtenir une file d'attente par flot actif.

Dans une étape H1, un compteur i est initialisé pour pointer sur la file d'attente associée au premier flot actif qui a des demandes temporisées.

Dans une étape H2, le dispositif d'acheminement 24 extrait de la file d'attente associée au i-ème flot actif une demande temporisée, afin qu'elle soit transmise sur le lien L.

Dans une étape H3, la demande temporisée extraite est transmise immédiatement sur le lien L, plus précisément à l'interface de sortie en charge des émissions et réceptions sur le lien L.

Dans une étape H4, le compteur i est incrémenté et pointe sur le flot actif suivant, pour lequel au moins une demande est temporisée.

Dans une étape H5, le dispositif d'acheminement 24 met à jour le débit résiduel pour le lien L, en fonction de l'information relative au volume du segment de données demandé.

Dans une étape H6, le dispositif d'acheminement 24 détermine s'il reste du débit résiduel disponible sur ce cycle et s'il reste des flots actifs. Si tel est le cas, le procédé repasse à l'étape H2 d'extraction de la file d'attente.

Dans le cas contraire, les étapes du procédé de communication H1 à H6 mises en oeuvre pour un cycle pour transmettre les demandes temporisées grâce au débit résiduel sont terminées.

Dans un mode de réalisation particulier, le débit résiduel est réparti entre les flots actifs régulés, c'est-à-dire ceux ayant des demandes temporisées.

Les première et deuxième variantes décrites en relation avec le premier mode de réalisation sont également applicables à ce deuxième mode de réalisation pour la gestion des files d'attente associées à chaque flot actif.

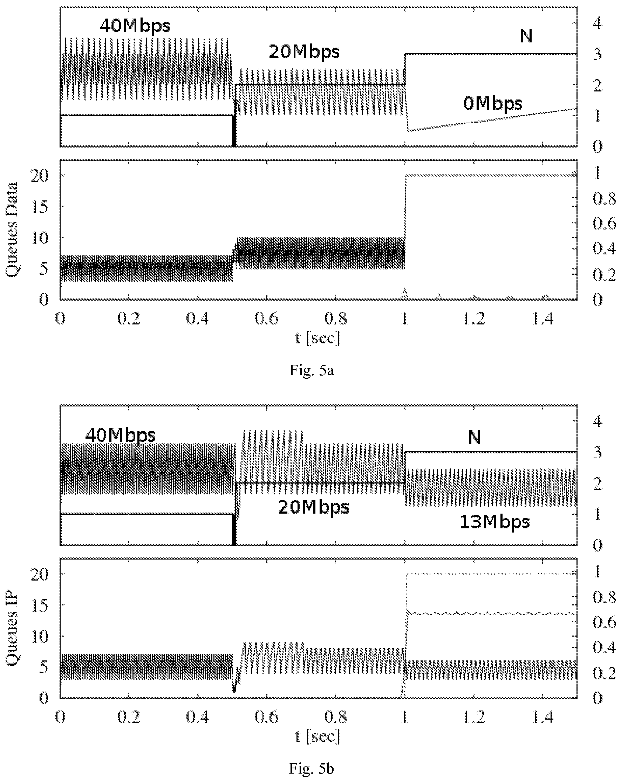

A titre illustratif, des résultats obtenus respectivement par un procédé selon l'état de la technique et grâce au procédé de communication selon ce deuxième mode de réalisation sont représentés sur les figures 5a et 5b.

On se place dans un cas simple où trois flots sont actifs. Les premier et deuxième flots, représentés en traits pleins, sont des flots dont le débit respectif est contrôlé par l'entité cliente ; il s'agit par exemple d'une session applicative ou d'un transfert de fichier. Un troisième flot, représenté en traits pointillés, est un flot « gourmand » (« greedy » selon la terminologie anglosaxonne), c'est-à-dire un flot non contrôlé en débit, requérant constamment un débit élevé. Dans cet exemple, le deuxième flot apparaît au bout de 0,5 seconde et le troisième flot apparaît au bout d'une seconde.

La capacité du lien L est de quarante mégabits par seconde.

La figure 5a illustre les résultats obtenus avec un procédé selon l'état de la technique, c'est-à-dire avec une file d'attente pour les segments de données, dimensionnée pour mémoriser vingt segments de données. Sur le premier graphe de la figure 5a, est représentée l'évolution du débit en entrée des premier et deuxième flots. Entre 0 et 0,5 seconde, le débit en entrée du premier flot est de l'ordre du débit du lien. On note qu'à l'arrivée du deuxième flot, le débit en entrée des premier et deuxième flots correspond au débit équitable avec deux flots actifs, soit vingt mégabits par seconde. A l'arrivée du troisième flot, les débits en entrée des premier et deuxième flots tendent vers zéro. En effet, les premier et deuxième flots étant contrôlés en débit, les demandes sont ajustées par les entités clientes en fonction de ce qu'il est possible d'offrir. Sur le deuxième graphe de la figure 5a, est représentée l'évolution du nombre de segments de données mémorisés dans la file d'attente. Avant l'apparition du deuxième flot, ce nombre est de l'ordre de cinq segments de données. Après l'apparition du deuxième flot et avant celle du troisième flot, ce nombre est de l'ordre de sept. Après l'apparition du troisième flot, ce nombre atteint la taille maximale de la file d'attente et comprend essentiellement des segments de données du troisième flot. Un taux de perte des segments de données pour le troisième flot est quasi-nul. Le troisième flot consomme ainsi quasiment tout le débit disponible en entrée.

La figure 5b illustre les résultats obtenus avec le procédé de communication selon le deuxième mode de réalisation. Pour chacun des flots actifs vingt demandes peuvent être mémorisées dans la file d'attente. Sur le premier graphe de la figure 5b, est représentée l'évolution du débit en entrée des premier et deuxième flots. On note qu'à l'arrivée du deuxième flot, le débit en entrée du premier flot diminue mais reste au débit équitable (de l'ordre de vingt mégabits par seconde). Il en de même à l'arrivée du troisième flot : les débits des premier et deuxième flots sont de l'ordre de treize mégabits par seconde. Sur le deuxième graphe de la figure 5b, est représentée l'évolution du nombre de demandes mémorisées dans la file d'attente pour chacun des trois flots. Avant l'apparition du deuxième flot, ce nombre est de l'ordre de cinq demandes pour le premier flot. Puis, entre 0.5 et une seconde, c'est-à-dire avant l'apparition du troisième flot, ce nombre est de l'ordre de sept demandes pour les premier et deuxième flots. Après l'apparition du troisième flot, ce nombre reste sensiblement égal pour les premier et deuxième flots. Pour le troisième flot, le nombre de demandes mémorisées dans la file d'attente atteint la valeur maximale (vingt demandes) et un taux de perte de soixante-dix pourcents des demandes est atteint pour le troisième flot.

On constate ainsi pour cet exemple illustratif que les demandes des premier et deuxième flots sont protégées tant que le débit en entrée pour ces flots est inférieur au débit équitable. Les demandes des premier et deuxième flots sont également protégées de celles du troisième flot (« gourmand »).

Nous allons maintenant décrire un dispositif d'acheminement dans un mode particulier de réalisation de l'invention en référence à la figure 4. Un tel dispositif 20 est agencé pour traiter des segments de données appartenant à différents flots et comprend :
- la table d'acheminement 110 FIB décrite précédemment ;
- la table des demandes pendantes 112 PIT décrite précédemment ;
- les moyens de mémorisation 114 ou magasin de contenus décrit précédemment ;
- la file d'attente 116, décrite précédemment ;
- un module de communication 100 avec les autres dispositifs du réseau de communication, agencé pour émettre des données, notamment des demandes relatives à des segments de données appartenant à un flot, et pour recevoir des segments de données ;
- un module 102 de traitement de demandes relatives à des segments de données en relation avec la table des demandes pendantes 112, agencé notamment pour déterminer si une demande relative à un segment de données est déjà pendante et le cas échéant mettre à jour la table des demandes pendantes, pour acheminer une demande grâce aux données d'acheminement mémorisées dans la table d'acheminement 110 et transmettre les segments de données à destination des entités clientes les ayant demandés grâce à la table des demandes pendantes 112 ;
- un module de détermination 104 d'un débit en entrée pour ledit lien ;
- un module de comparaison 106, agencé pour comparer le débit en entrée déterminé par rapport à un seuil ;
- un module 108 de gestion de la file d'attente 116.

Les modules de détermination 104, de comparaison 106 et de gestion 108 de la file d'attente sont activés pour traiter une demande relative à un segment de données d'un flot donné, à acheminer par l'intermédiaire d'un lien du dispositif d'acheminement 20.

Le module de détermination 104 du débit en entrée est alors agencé pour déterminer le débit nécessaire à une réception au moyen du lien du segment de données correspondant à la demande à acheminer et également d'un ensemble de segments de données correspondant à des demandes pendantes.

Le module 108 est notamment agencé pour mémoriser dans la file d'attente 116 une demande temporisée, en cas de vérification positive par le module de comparaison 104.

Le module de détermination 104 est en outre agencé pour déterminer un débit résiduel disponible pour un cycle, à partir du débit disponible sur le le lien en entrée et du débit nécessaire à la réception des segments de données associés aux demandes pendantes. En fonction du débit résiduel, le module 108 est agencé, pour extraire de la file d'attente 116 au moins une demande relative à un segment de données.

On rappelle ici que dans le premier mode de réalisation, le seuil correspond au débit disponible sur le lien en entrée du dispositif.

Dans le deuxième mode de réalisation, le seuil correspond au débit équitable. Dans ce deuxième mode de réalisation, le module de détermination 104 est agencé pour déterminer le débit en entrée par flot et le module de comparaison 106 est agencé pour comparer le débit en entrée du flot, auquel est relatif la demande en cours de traitement, avec le débit équitable.

Les modules 102, 104, 106, 108 sont agencés pour mettre en oeuvre le procédé précédemment décrit. Il s'agit de préférence de modules logiciels comprenant des instructions logicielles pour faire exécuter les étapes du procédé précédemment décrit, mises en oeuvre par le dispositif d'acheminement. L'invention concerne donc aussi :
- un programme pour un dispositif d'acheminement, comprenant des instructions de code de programme destinées à commander l'exécution des étapes du procédé précédemment décrit, lorsque ledit programme est exécuté par ledit dispositif ;
- un support d'enregistrement lisible par un dispositif d'acheminement sur lequel est enregistré le programme pour un dispositif d'acheminement.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un réseau de communication comprenant au moins un dispositif d'acheminement tel que décrit précédemment.

## Revendications

1. Procédé de communication mis en oeuvre par un dispositif (20-28) d'acheminement dans un réseau de communication (1) centré sur les informations, ledit procédé comprenant les étapes suivantes mises en oeuvre pour traiter une demande relative à un segment de données d'un flot donné, ladite demande étant à acheminer sur un lien du dispositif d'acheminement :
- une étape (E2, G3) de vérification qu'un débit en entrée pour ledit lien est supérieur à un seuil, le débit en entrée pour ledit lien correspondant à celui nécessaire à une réception par le dispositif au moyen dudit lien du segment de données demandé et d'un ensemble de segments de données correspondant à des demandes pendantes ;
- une étape (E3, G4) de temporisation de ladite demande à acheminer, en cas de vérification positive.

2. Procédé de communication selon la revendication 1, comprenant en outre une étape (G2) d'obtention d'une information relative à un volume du segment de données demandé.

3. Procédé de communication selon la revendication 1, dans lequel ledit seuil correspond au débit disponible sur ledit lien en entrée dudit dispositif.

4. Procédé de communication selon la revendication 1, dans lequel le débit en entrée est déterminé pour les demandes pendantes relatives à des segments de données du flot donné et ledit seuil correspond à un débit équitable.

5. Procédé de communication selon la revendication 4, comprenant :
- pour un flot actif, une étape d'incrémentation d'un crédit alloué audit flot actif en fonction du débit équitable, et
- une étape de décrémentation (G7) du crédit alloué au flot donné en fonction d'une information relative à un volume du segment de données demandé.

6. Procédé de communication selon la revendication 4, dans lequel ladite étape de vérification consiste à vérifier que le flot donné a dépassé le débit équitable ou qu'au moins une demande du flot donné est temporisée.

7. Procédé de communication selon la revendication 1, dans lequel l'étape de temporisation consiste à mémoriser dans une file d'attente la demande à acheminer et à extraire ladite demande pour l'acheminer sur ledit lien en fonction d'un débit résiduel, déterminé en fonction du débit en entrée sur ledit lien.

8. Procédé de communication selon la revendication 7, dans lequel le débit résiduel est réparti entre les flots actifs ayant des demandes temporisées.

9. Dispositif (20-23) d'acheminement dans un réseau de communication centré sur les informations, comprenant les moyens suivants, activés pour traiter une demande relative à un segment de données d'un flot donné, ladite demande étant à acheminer sur un lien du dispositif d'acheminement :
- des moyens de détermination (104) d'un débit en entrée pour ledit lien, le débit en entrée pour ledit lien correspondant à celui nécessaire à une réception par le dispositif au moyen dudit lien dudit segment de données demandé et d'un ensemble de segments de données correspondant à des demandes pendantes
- des moyens de vérification (106), agencés pour vérifier que le débit en entrée est supérieur à un seuil ;
- des moyens de temporisation (116), agencés pour temporiser ladite demande à acheminer, en cas de vérification positive.

10. Réseau de communication comprenant au moins un dispositif d'acheminement selon la revendication 9.

11. Programme pour un dispositif d'acheminement, comprenant des instructions de code de programme destinées à commander l'exécution des étapes du procédé selon l'une des revendications 1 à 8, lorsque ledit programme est exécuté par ledit dispositif.

12. Support d'enregistrement lisible par un dispositif d'acheminement sur lequel est enregistré le programme selon la revendication 11.

## Patentansprüche

1. Verfahren zur Kommunikation, das durch eine Vorrichtung (20-28) zum Routing in einem informationszentrierten Kommunikationsnetz (1) durchgeführt wird, wobei das Verfahren die folgenden Schritte umfasst, die durchgeführt werden, um eine Anforderung in Bezug auf ein Datensegment eines gegebenen Stroms zu verarbeiten, wobei die Anforderung auf einer Verbindungsstrecke der Routing-Vorrichtung zu routen ist:
- einen Schritt (E2, G3) der Überprüfung, ob eine Bitrate am Eingang für die Verbindungsstrecke größer als ein Schwellenwert ist, wobei die Bitrate am Eingang für die Verbindungsstrecke derjenigen entspricht, die für einen Empfang des angeforderten Datensegments und einer Gesamtheit von anhängigen Anforderungen entsprechenden Datensegmenten durch die Vorrichtung mittels der Verbindungsstrecke erforderlich ist;
- einen Schritt (E3, G4) der Verzögerung der zu routenden Anforderung im Falle einer positiven Überprüfung.

2. Verfahren zur Kommunikation nach Anspruch 1, welches außerdem einen Schritt (G2) der Gewinnung einer Information in Bezug auf ein Volumen des angeforderten Datensegments umfasst.

3. Verfahren zur Kommunikation nach Anspruch 1, wobei der Schwellenwert der Bitrate entspricht, die auf der Verbindungsstrecke am Eingang der Vorrichtung verfügbar ist.

4. Verfahren zur Kommunikation nach Anspruch 1, wobei die Bitrate am Eingang für die anhängigen Anforderungen bestimmt wird, die sich auf Datensegmente des gegebenen Stroms beziehen, und der Schwellenwert einer fairen Bitrate entspricht.

5. Verfahren zur Kommunikation nach Anspruch 4, welches umfasst:
- für einen aktiven Strom, einen Schritt der Inkrementierung eines dem aktiven Strom zugewiesenen Kredits in Abhängigkeit von der fairen Bitrate, und
- einen Schritt der Dekrementierung (G7) des dem gegebenen Strom zugewiesenen Kredits in Abhängigkeit von einer Information in Bezug auf ein Volumen des angeforderten Datensegments.

6. Verfahren zur Kommunikation nach Anspruch 4, wobei der Schritt der Überprüfung darin besteht zu überprüfen, ob der gegebene Strom die faire Bitrate überschritten hat oder ob wenigstens eine Anforderung des gegebenen Stroms verzögert ist.

7. Verfahren zur Kommunikation nach Anspruch 1, wobei der Schritt der Verzögerung darin besteht, die zu routende Anforderung in einer Warteschlange zu speichern und in Abhängigkeit von einer Restbitrate, die in Abhängigkeit von der Bitrate am Eingang auf der Verbindungsstrecke bestimmt wird, die Anforderung zu extrahieren, um sie auf der Verbindungsstrecke zu routen.

8. Verfahren zur Kommunikation nach Anspruch 7, wobei die Restbitrate auf die aktiven Ströme aufgeteilt wird, die verzögerte Anforderungen aufweisen.

9. Vorrichtung (20-23) zum Routing in einem informationszentrierten Kommunikationsnetz, welches die folgenden Mittel umfasst, die aktiviert werden, um eine Anforderung in Bezug auf ein Datensegment eines gegebenen Stroms zu verarbeiten, wobei die Anforderung auf einer Verbindungsstrecke der Routing-Vorrichtung zu routen ist:
- Mittel zur Bestimmung (104) einer Bitrate am Eingang für die Verbindungsstrecke, wobei die Bitrate am Eingang für die Verbindungsstrecke derjenigen entspricht, die für einen Empfang des angeforderten Datensegments und einer Gesamtheit von anhängigen Anforderungen entsprechenden Datensegmenten durch die Vorrichtung mittels der Verbindungsstrecke erforderlich ist;
- Mittel zur Überprüfung (106), die dafür ausgelegt sind zu überprüfen, ob die Bitrate am Eingang größer als ein Schwellenwert ist;
- Mittel zur Verzögerung (116), die dafür ausgelegt sind, die zu routende Anforderung im Falle einer positiven Überprüfung zu verzögern.

10. Kommunikationsnetz, welches wenigstens eine Vorrichtung zum Routing nach Anspruch 9 umfasst.

11. Programm für eine Vorrichtung zum Routing, welches Programmcodeanweisungen umfasst, die dazu bestimmt sind, die Ausführung der Schritte des Verfahrens nach einem der Ansprüche 1 bis 8 zu steuern, wenn das Programm von der Vorrichtung ausgeführt wird.

12. Aufzeichnungsmedium, das von einer Vorrichtung zum Routing lesbar ist, auf dem das Programm nach Anspruch 11 aufgezeichnet ist.

## Claims

1. Communication method implemented by a routing device (20-28) in an information-centric communication network (1), said method comprising the following steps implemented to process a request concerning a data segment of a given stream, said request having to be routed over a link from the routing device:
- a step (E2, G3) of checking that an input bit rate for said link is above a threshold, the input bit rate for said link corresponding to that needed for reception by the device by means of said link of the requested data segment and of a set of data segments corresponding to pending requests;
- a step (E3, G4) of time-delaying said request to be routed, in the case of a positive check.

2. Communication method according to Claim 1, further comprising a step (G2) of obtaining information relating to a volume of the requested data segment.

3. Communication method according to Claim 1, in which said threshold corresponds to the bit rate available on said link at the input of said device.

4. Communication method according to Claim 1, in which the input bit rate is determined for the pending requests relating to data segments of the given stream and said threshold corresponds to an equitable bit rate.

5. Communication method according to Claim 4, comprising:
- for an active stream, a step of incrementing a credit allotted to said active stream as a function of the equitable bit rate, and
- a step (G7) of decrementing the credit allotted to the given stream as a function of information relating to a volume of the requested data segment.

6. Communication method according to Claim 4, in which said checking step consists in checking that the given stream has exceeded the equitable bit rate or that at least one request of the given stream is time-delayed.

7. Communication method according to Claim 1, in which the time-delaying step consists in storing the request to be routed in a queue, and in extracting said request to route it over said link as a function of a residual bit rate, determined as a function of the input bit rate on said link.

8. Communication method according to Claim 7, in which the residual bit rate is divided up between the active streams having time-delayed requests.

9. Routing device (20-23) in an information-centric communication network, comprising the following means, activated to process a request relating to a data segment of a given stream, said request having to be routed over a link of the routing device:
- means (104) for determining an input bit rate for said link, the input bit rate for said link corresponding to that needed for reception by the device by means of said link of said requested data segment and of a set of data segments corresponding to pending requests
- checking means (106), arranged to check that the input bit rate is above a threshold;
- time-delay means (116), arranged to time-delay said request to be routed, in the case of a positive check.

10. Communication network comprising at least one routing device according to Claim 9.

11. Program for a routing device, comprising program code instructions intended to control the execution of the steps of the method according to one of Claims 1 to 8, when said program is run by said device.

12. Storage medium that can be read by a routing device on which the program according to Claim 11 is stored.
